# EUROPEAN PATENT APPLICATION

(11) **EP 1 770 810 A2**
(43) Date of publication of application: **04.04.2007**
(21) Application number: 06019467.7
(22) Date of filing: 18.09.2006
(51) Int. Cl.: H01M 8/04, H01M 8/00

(54) **Apparatus for controlling operation of fuel cell system and method thereof**

(30) Priority: 28.09.2005 KR 20050090828
(71) Applicant: LG Electronics Inc., Yongdungpo-gu Seoul (KR); LG Chem, Ltd., Yongdungpo-Gu Seoul (KR)
(72) Inventor: Ko, Seung-Tae, Seoul (KR); Choi, Hong, Manan-Gu Anyang Gyeonggi-Do (KR)
(74) Representative: TER MEER - STEINMEISTER & PARTNER GbR

(57) **Abstract**

An apparatus for controlling operation of a fuel cell system, and a method thereof. The apparatus comprises a power generation amount controlling unit (400) for generating a user's heat usage pattern and a user's power usage pattern and outputting a power generation amount controlling signal for controlling a power generation amount of a fuel cell by selecting the user's heat usage pattern or the user's power usage pattern according to a system efficiency priority regarding the generated user's heat usage pattern and the user's power usage pattern, and a power generation command generating unit (50) for applying a power generation command corresponding to the power generation amount controlling signal outputted from the power generation amount controlling unit (400) to the fuel cell.

## Description

### BACKGROUND OF THE INVENTION

### 1. Field of the Invention

The present invention relates to a fuel cell system, and more particularly, to an apparatus for controlling operation of a fuel cell system capable of applying a user's heat usage pattern to a power generation for a fuel cell, and a method thereof.

### 2. Description of the Background Art

Generally, a fuel cell system serves to directly convert fuel energy into electric energy. The fuel cell system is provided with an anode and a cathode at both sides of a high molecule electrolyte membrane. As a fuel of hydrogen is electrochemically oxidized at the anode and oxygen is electrochemically deoxidized at the cathode, electrons are generated. The fuel cell system generates electric energy as the generated electrons move.

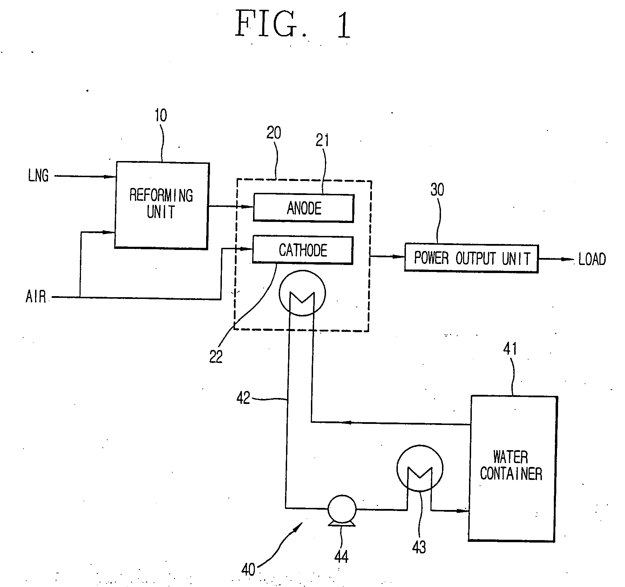

FIG. 1 is a diagram showing a proton exchange membrane fuel cell (PEMFC), in which a hydrocarbon-based fuel such as LNG, LPG, CH₃OH, etc. (LNG in drawing) undergoes a desulfurization process, a reforming process, and a hydrogen refining process in a reformer, so that only hydrogen is refined thus to be used as a fuel.

As shown in FIG. 1, the conventional fuel cell system comprises a reforming unit 10 for refining hydrogen from LNG; a stack unit 20 connected to the reforming unit 10 and having an anode 21 to which refined hydrogen is supplied and a cathode 22 to which air is supplied, for generating electric power and heat by electrochemically reacting hydrogen and air; a power output unit 30 connected to an outlet of the stack unit 20 for supplying power to a load; a heat exchange unit 40 for cooling the reforming unit 10 and the stack unit 20 by respectively supplying water thereto; and a controller (not shown) electrically connected to each of the units and controlling an operation of each unit.

The heat exchange unit 40 comprises a water container 41 for containing a certain amount of water, a cooling water line 42 connected between the water container 41 and the stack unit 20 for transmitting cooling water to the stack unit 20, a heat emission unit 43 installed in the middle of the cooling water line 42 for cooling water recollected to the water container 41 from the stack unit 20, and a circulation pump 44 installed in the middle of the cooling water line 42 for pumping water inside the water container 41 and supplying the pumped water to the stack unit 20.

An operation of the conventional fuel cell system will be explained.

First, a hydrocarbon-based fuel is refined in the reforming unit 10, thereby refining hydrogen. The refined hydrogen is supplied to the anode 21 of the stack unit 20.

The reforming unit 10 supplies air to the cathode 22 of the stack unit 20.

An oxidation is performed in the anode 21 of the stack unit and a deoxidation is performed in the cathode 22 of the stack unit 20.

While the oxidation and the deoxidation are performed, electrons are generated. As the generated electrons move to the cathode 22 from the anode 21, power is generated. The generated power is converted into an alternating current by the power output unit 30, and then is supplied to each kind of electric product.

The stack unit 20 simultaneously generates power and heat. Accordingly, water contained in the water container 41 is supplied to the stack unit 20 through the cooling water line 42 by the circulation pump 44 of the heat exchange unit 40, and the water supplied to the stack unit 20 is recollected in the water container 41. As the water supplying process and the water recollecting process are repeatedly performed, the stack unit 20 is cooled.

The conventional fuel cell system was controlled by a method proposed by the Japanese Matsushita.

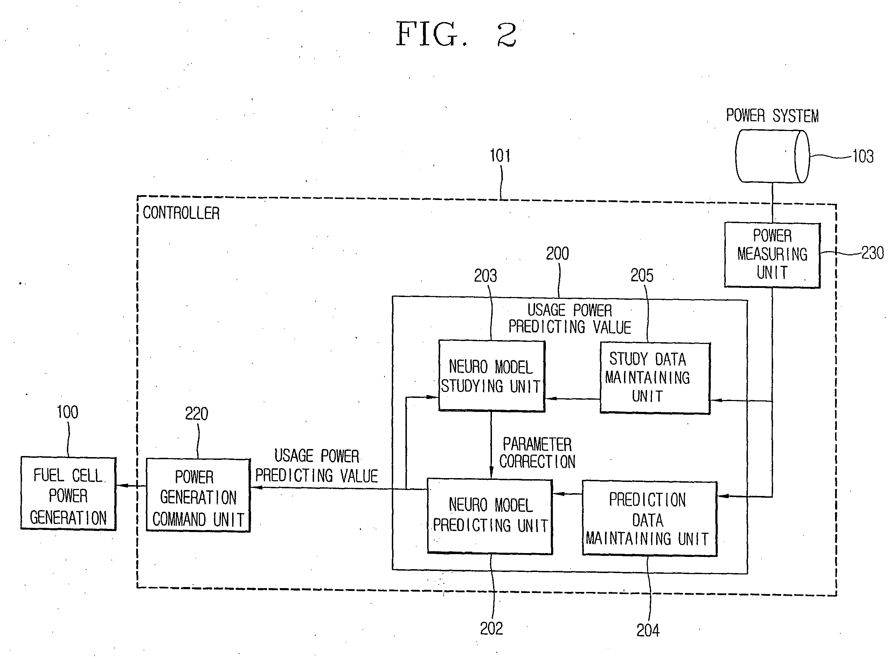

FIG. 2 is a block diagram showing a construction of an apparatus for controlling operation of a fuel cell system in accordance with the conventional art.

As shown in FIG. 2, the conventional apparatus for controlling operation of a fuel cell system comprises a power measuring unit 230, a usage power predicting unit 200, a power generation command unit 220, and a fuel cell power generator 100.

The power measuring unit 230 measures an amount of power detected by a power system 103.

The usage power predicting unit 200 stores an amount of power measured by the power measuring unit 230 by accumulation for a certain period, generates a user's power usage pattern by using the stored power information, and generates a usage power prediction value on the basis of the generated pattern.

The usage power predicting unit 200 comprises a study data maintaining unit 205, a neuro model studying unit 203, a neuro model predicting unit 202, and a prediction data maintaining unit 204.

The power generation command unit 220 applies a command corresponding to a usage power prediction value outputted from the usage power predicting unit 200 to the fuel cell power generator 100, and the fuel cell power generator 100 generates power on the basis of the received command.

In the conventional apparatus for controlling operation of a fuel cell system, a user's power usage amount is predicted and a power generation command is applied on the basis of the predicted information.

However, when the conventional method is applied to a fuel cell system in summer or in a hot region, an electric power efficiency is more lowered than a heat efficiency.

For instance, whereas the electric power efficiency is 35%, the heat efficiency is 50% in summer or in a hot region.

### BRIEF DESCRIPTION OF THE INVENTION

Therefore, an object of the present invention is to provide an apparatus for controlling operation of a fuel cell system capable of enhancing an efficiency of a fuel cell system by storing heat usage data and power usage data detected for a certain time, generating a user's heat usage pattern and a user's power usage pattern on the basis of the data, and selectively applying the user's heat usage pattern or the user's power usage pattern to a power generation of a fuel cell according to a system efficiency priority regarding the user's heat usage pattern and the user's power usage pattern, and a method thereof.

To achieve these and other advantages and in accordance with the purpose of the present invention, as embodied and broadly described herein, there is provided an apparatus for controlling operation of a fuel cell system, comprising: a power generation amount controlling unit for generating a user's heat usage pattern and a user's power usage pattern and outputting a power generation amount controlling signal for controlling a power generation amount of a fuel cell by selecting the user's heat usage pattern or the user's power usage pattern according to a system efficiency priority regarding the generated user's heat usage pattern and the user's power usage pattern; and a power generation command generating unit for applying a power generation command corresponding to the power generation amount controlling signal outputted from the power generation amount controlling unit to the fuel cell.

According to another embodiment, there is provided an apparatus for controlling operation of a fuel cell system, comprising: a water amount detecting unit installed at a hot water heating line for detecting water amount data; a water temperature detecting unit installed at the hot water heating line for detecting water temperature data; a power detecting unit for detecting current power data; a power generation amount controlling unit for generating a user's heat usage pattern based on the water amount data and the water temperature data, generating a user's power usage pattern based on the power data, selecting the_user's heat usage pattern or the user's power usage pattern according to a current system efficiency priority regarding the generated user's heat usage pattern and the user's power usage pattern, and outputting a power generation amount controlling signal for controlling a power generation amount of a fuel cell on the basis of the selected user's heat usage pattern or user's power usage pattern; and a power generation command generating unit for applying a power generation command corresponding to the power generation amount controlling signal outputted from the power generation amount controlling unit to the fuel cell.

To achieve these and other advantages and in accordance with the purpose of the present invention, as embodied and broadly described herein, there is also provided a method for controlling operation of a fuel cell system, comprising: detecting water amount data, water temperature data, and power data; generating a user's heat usage pattern and a user's power usage pattern on the basis of the detected water amount data, the water temperature data, and the power data; and selecting the user's heat usage pattern or the user's power usage pattern according to a current system efficiency priority, reading a power generation amount based on the selected pattern, and thereby controlling a power generation amount of a fuel cell.

The foregoing and other objects, features, aspects and advantages of the present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
FIG. 1 is a diagram showing a fuel cell system in accordance with the conventional art;
FIG. 2 is a block diagram showing a construction of an apparatus for controlling operation of the fuel cell system in accordance with the conventional art;
FIG. 3 is a block diagram showing a construction of an apparatus for controlling operation of a fuel cell system according to the present invention; and
FIG. 4 is a flow chart showing a process for controlling operation of a fuel cell system according to the present invention.

### DETAILED DESCRIPTION OF THE INVENTION

Reference will now be made in detail to the preferred embodiments of the present invention, examples of which are illustrated in the accompanying drawings.

Hereinafter, an apparatus for controlling operation of a fuel cell system capable of enhancing an efficiency of a fuel cell system by storing heat usage data and power usage data detected for a certain time, generating a user's heat usage pattern and a user's power usage pattern on the basis of the data, and selectively applying the user's heat usage pattern or the user's power usage pattern to a power generation of a fuel cell according to a priority between a heat efficiency and a power efficiency, and a method thereof will be explained in more detail with reference to the attached drawings.

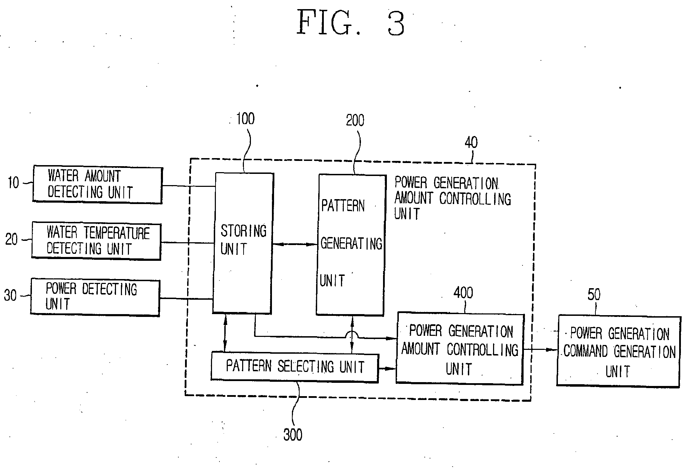

FIG. 3 is a block diagram showing a construction of an apparatus for controlling operation of a fuel cell system according to the present invention.

As shown in FIG. 3, the apparatus for controlling operation of a fuel cell system according to the present invention comprises a water amount detecting unit 10, a water temperature detecting unit 20, a power detecting unit 30, a power generation amount controlling unit 40, and a power generation command generating unit 50.

The water amount detecting unit 10 is installed at a hot water heating line thus to detect water amount data, the temperature detecting unit 20 is installed at the heating warm water thus to detect water temperature data, and the power detecting unit 30 detects a current power usage amount.

The power generation amount controlling unit 40 generates a user's heat usage pattern based on the water amount data and the water temperature data, generates a user's power usage pattern based on the power data, selects the user's heat usage pattern or the user's power usage pattern according to a system efficiency priority regarding the generated user's heat usage pattern and the user's power usage pattern, and outputs a power generation amount controlling signal for controlling a power generation amount of a fuel cell based on the selected user's heat usage pattern or user's power usage pattern.

The power generation amount controlling unit 40 comprises a storing unit 100, a pattern generating unit 200, a pattern selecting unit 300, and a power generation amount reading unit 400.

The storing unit 100 stores water amount data, water temperature data, power data, a system efficiency priority regarding a user's heat usage pattern and a user's power usage pattern according to season/date/time, a reference heat usage pattern and a reference power usage pattern according to season/date/time, and each power generation amount corresponding to the reference heat usage pattern and the reference power usage pattern.

As one example, the reference heat usage pattern and the reference power usage pattern according to season/date/time can be generated by a manufacturer by an experiment in a manufacturing process.

As another example, the reference heat usage pattern and the reference power usage pattern according to season/date/time can be generated by a user on the basis of water amount data and water temperature data accumulated for a certain time.

The pattern generating unit 200 generates a user's heat usage pattern on the basis of the water amount data and the water temperature data, and generates a user's power usage pattern on the basis of the power data.

The pattern selecting unit 300 selects the user's heat usage pattern or the user's power usage pattern outputted from the pattern generating unit 200 according to the system efficiency priority stored in the storing unit 100.

The system efficiency priority is determined on the basis of a database result for a heat efficiency and a power efficiency varied according to season or temperature.

For example, in case of summer, daytime, and a high temperature, the heat efficiency is higher than the power efficiency, and thus the user's heat usage pattern has a higher system efficiency priority than the user's power usage pattern.

The power generation amount reading unit 400 compares the user's heat usage pattern or the user's power usage pattern selected by the pattern selecting unit 300 with the reference heat usage pattern or the reference power usage pattern stored in the storing unit 100, and reads a power generation amount according to the comparison result.

If the user's heat usage pattern is consistent with the reference heat usage pattern, the power generation amount reading unit 400 reads a power generation amount corresponding to the reference heat usage pattern. If the user's power usage pattern is consistent with the reference power usage pattern, the power generation amount reading unit 400 reads a power generation amount corresponding to the reference power usage pattern.

On the contrary, if the user's heat usage pattern is not consistent with the reference heat usage pattern, the power generation amount reading unit 400 reads a power generation amount corresponding to the user's heat usage pattern. If the user's power usage pattern is not consistent with the reference power usage pattern, the power generation amount reading unit 400 reads a power generation amount corresponding to the user's power usage pattern.

The power generation command generating unit 50 applies a power generation command corresponding to a power generation amount controlling signal outputted from the power generation amount controlling unit 30 to the fuel cell system.

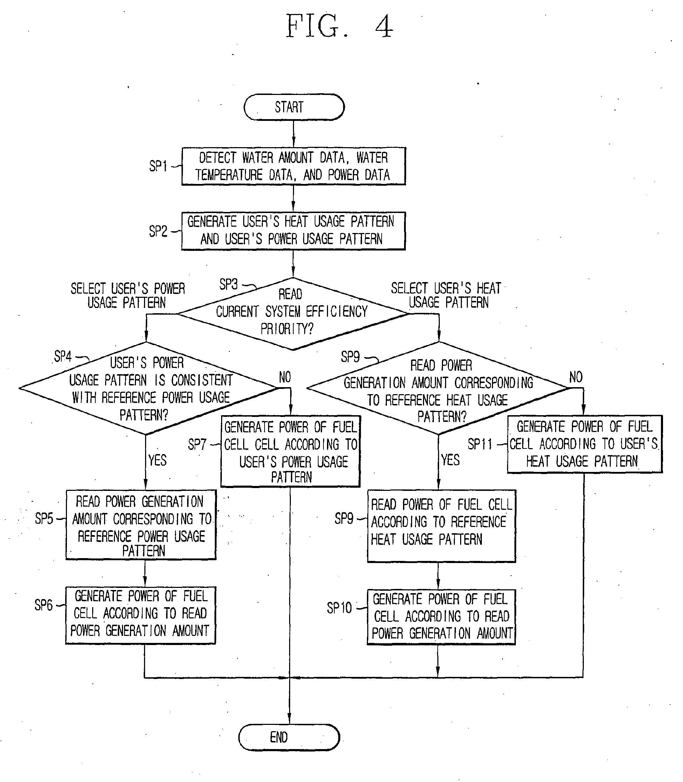

An operation of the apparatus for controlling operation of a fuel cell system according to the present invention will be explained with reference to FIG. 4.

The storing unit 100 stores water amount data, water temperature data, power data, a system efficiency priority regarding a user's heat usage pattern and a user's power usage pattern according to season/date/time, a reference heat usage pattern and a reference power usage pattern according to season/date/time, and each power generation amount corresponding to the reference heat usage pattern and the reference power usage pattern.

As one example, the reference heat usage pattern and the reference power usage pattern according to season/date/time can be generated by a manufacturer by an experiment in a manufacturing process.

As another example, the reference heat usage pattern and the reference power usage pattern according to season/date/time can be generated by a user on the basis of water amount data and water temperature data accumulated for a certain time.

The water amount detecting unit 10 detects water amount data, the temperature detecting unit 20 detects water temperature data, and the power detecting unit 30 detects a current power usage amount (SP1).

Then, the pattern generating unit 200 analyzes the water amount data, the water temperature data, and the power data accumulated for a certain time, and generates a user's heat usage pattern and a user's power usage pattern based on the analysis result (SP2).

Then, the pattern selecting unit 300 selects the user's heat usage pattern or the user's power usage pattern by reading a current system efficiency priority stored in the storing unit 100 (SP3).

If the user's heat usage pattern is selected as a result of the selection (SP3), the power generation amount controlling unit 40 compares a plurality of the reference heat usage patterns stored in the storing unit 100 with the user's heat usage pattern, and controls a power generation amount on the basis of the comparison result (SP8 to SP11).

If the user's heat usage pattern is consistent with the reference heat usage pattern, the power generation amount controlling unit 40 reads a power generation amount corresponding to the reference heat usage pattern (SP9), and controls a power generation of a fuel cell according to the read power generation amount (SP10).

On the contrary, if the user's heat usage pattern is not consistent with the reference heat usage pattern, the power generation amount controlling unit 40 controls a power generation amount of a fuel cell on the basis of the user's heat usage pattern (SP11).

If the user's power usage pattern is selected as a result of the selection (SP3), the power generation amount controlling unit 40 compares a plurality of the reference power usage patterns stored in the storing unit 100 with the user's power usage pattern, and controls a power generation amount on the basis of the comparison result (SP4 to SP7).

If the user's power usage pattern is consistent with the reference power usage pattern, the power generation amount controlling unit 40 reads a power generation amount corresponding to the reference power usage pattern (SP5), and controls a power generation of a fuel cell according to the read power generation amount (SP6).

On the contrary, if the user's power usage pattern is not consistent with the reference power usage pattern, the power generation amount controlling unit 40 controls a power generation amount of a fuel cell on the basis of the user's power usage pattern (SP7).

In the present invention, the heat usage data and the power usage data accumulated for a certain time are detected thus to be stored, the user's heat usage pattern and the user's power usage pattern are generated on the basis of the stored data, and the user's heat usage pattern and the user's power usage pattern are selected according to a priority between a heat efficiency and a power efficiency thereby to be applied to a power generation of a fuel cell.

As aforementioned, in the apparatus for controlling operation of a fuel cell system and the method thereof according to the present invention, the heat usage data and the power usage data accumulated for a certain time are detected thus to be stored, the user's heat usage pattern and the user's power usage pattern are generated on the basis of the stored data, and the user's heat usage pattern and the user's power usage pattern are selected according to a priority between a heat efficiency and a power efficiency thereby to be applied to a power generation of a fuel cell. Accordingly, an operation efficiency of the fuel cell system is enhanced.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the metes and bounds of the claims, or equivalents of such metes and bounds are therefore intended to be embraced by the appended claims.

## Claims

1. An apparatus for controlling operation of a fuel cell system, comprising:
a power generation amount controlling unit for generating a user's heat usage pattern and a user's power usage pattern and outputting a power generation amount controlling signal for controlling a power generation amount of a fuel cell by selecting the user's heat usage pattern or the user's power usage pattern according to a system efficiency priority regarding the generated user's heat usage pattern and the user's power usage pattern; and
a power generation command generating unit for applying a power generation command corresponding to the power generation amount controlling signal outputted from the power generation amount controlling unit to the fuel cell.

2. The apparatus of claim 1, wherein the power generation amount controlling unit generates the user's heat usage pattern according to water amount data and water temperature data detected for a certain time.

3. The apparatus of claim 1, wherein the power generation amount controlling unit generates the user's power usage pattern according to power data detected for a certain time.

4. The apparatus of claim 1, wherein the power generation amount controlling unit comprises:
a storing unit for storing water amount data, water temperature data, power data, a user's heat usage pattern, a user's power usage pattern, a system efficiency priority, a reference heat usage pattern and a reference power usage pattern according to season/date/time, and each power generation amount corresponding to the reference heat usage pattern and the reference power usage pattern;
a pattern generating unit for generating a user's heat usage pattern on the basis of the water amount data and the water temperature data, and generating a user's power usage pattern on the basis of the power data;
a pattern selecting unit for selecting the user's heat usage pattern or the user's power usage pattern outputted from the pattern generating unit according to the system efficiency priority stored in the storing unit; and
a power generation amount reading unit for comparing the user's heat usage pattern or the user's power usage pattern selected by the pattern selecting unit with the reference heat usage pattern or the reference power usage pattern stored in the storing unit, and reading a power generation amount according to the comparison result.

5. An apparatus for controlling operation of a fuel cell system, comprising:
a water amount detecting unit installed at a hot water heating line for detecting water amount data;
a water temperature detecting unit installed at the hot water heating line for detecting water temperature data;
a power detecting unit for detecting current power data;
a power generation amount controlling unit for generating a user's heat usage pattern based on the water amount data and the water temperature data, generating a user's power usage pattern based on the power data, selecting the_user's heat usage pattern or the user's power usage pattern according to a system efficiency priority regarding the generated user's heat usage pattern and the user's power usage pattern, and outputting a power generation amount controlling signal for controlling a power generation amount of a fuel cell on the basis of the selected user's heat usage pattern or user's power usage pattern; and
a power generation command generating unit for applying a power generation command corresponding to the power generation amount controlling signal outputted from the power generation amount controlling unit to the fuel cell.

6. The apparatus of claim 5, wherein the power generation amount controlling unit comprises:
a storing unit for storing water amount data, water temperature data, power data, a user's heat usage pattern, a user's power usage pattern, a system efficiency priority, a reference heat usage pattern and a reference power usage pattern according to season/date/time, and each power generation amount corresponding to the reference heat usage pattern and the reference power usage pattern;
a pattern generating unit for generating a user's heat usage pattern on the basis of the water amount data and the water temperature data, and generating a user's power usage pattern on the basis of the power data;
a pattern selecting unit for selecting the user's heat usage pattern or the user's power usage pattern outputted from the pattern generating unit according to the system efficiency priority stored in the storing unit; and
a power generation amount reading unit for comparing the user's heat usage pattern or the user's power usage pattern selected by the pattern selecting unit with the reference heat usage pattern or the reference power usage pattern stored in the storing unit, and reading a power generation amount according to the comparison result.

7. The apparatus of claim 6, wherein if the user's heat usage pattern is consistent with the reference heat usage pattern, the power generation amount reading unit reads a power generation amount corresponding to the reference heat usage pattern.

8. The apparatus of claim 6, wherein if the user's power usage pattern is consistent with the reference power usage pattern, the power generation amount reading unit reads a power generation amount corresponding to the reference power usage pattern.

9. The apparatus of claim 6, wherein if the user's heat usage pattern is not consistent with the reference heat usage pattern, the power generation amount reading unit reads a power generation amount corresponding to the user's heat usage pattern.

10. The apparatus of claim 6, wherein if the user's power usage pattern is not consistent with the reference power usage pattern, the power generation amount reading unit reads a power generation amount corresponding to the user's power usage pattern.

11. The apparatus of claim 5, wherein the reference heat usage pattern and the reference power usage pattern according to season/date/time is generated by a manufacturer by an experiment in a manufacturing process.

12. The apparatus of claim 5, wherein the reference heat usage pattern and the reference power usage pattern according to season/date/time are generated by a user on the basis of water amount data, water temperature data, and power data accumulated for a certain time.

13. A method for controlling operation of a fuel cell system, comprising:
detecting water amount data, water temperature data, and power data;
generating a user's heat usage pattern and a user's power usage pattern on the basis of the detected water amount data, the water temperature data, and the power data; and
selecting the user's heat usage pattern or the user's power usage pattern according to a current system efficiency priority, reading a power generation amount based on the selected pattern, and thereby controlling a power generation amount of a fuel cell.

14. The method of claim 13, wherein the step of controlling a power generation amount comprises:
if the user's heat usage pattern is selected, comparing the user's heat usage pattern with a plurality of reference heat usage patterns; and
if the user's heat usage pattern is consistent with the reference heat usage pattern as a result of the comparison, reading a power generation amount corresponding to the reference heat usage pattern and controlling a power generation of a fuel cell according to the read power generation amount.

15. The method of claim 14, wherein if the user's heat usage pattern is consistent with the reference heat usage pattern as a result of the comparison, controlling a power generation of a fuel cell according to the user's heat usage pattern.

16. The method of claim 13, wherein the step of controlling a power generation amount comprises:
if the user's power usage pattern is selected, comparing the user's power usage pattern with a plurality of reference power usage patterns; and
if the user's power usage pattern is consistent with the reference power usage pattern as a result of the comparison, reading a power generation amount corresponding to the reference power usage pattern and controlling a power generation of a fuel cell according to the read power generation amount.

17. The method of claim 16, further comprising controlling a power generation amount of a fuel cell on the basis of the user's power usage pattern if the user's power usage pattern is not consistent with the reference power usage pattern.

18. The method of claim 13, further comprising:
storing a plurality of reference heat usage patterns and reference power usage patterns on the basis of water amount data, water temperature data, and power data accumulated for a certain time according to season/date/time; and
storing each power generation amount corresponding to the reference heat usage patterns and the reference power usage patterns.

19. The method of claim 18, wherein the plural reference heat usage patterns and the reference power usage patterns are generated by a manufacturer by an experiment in a manufacturing process.

20. The method of claim 18, wherein the plural reference heat usage patterns and the reference power usage patterns are generated by a user on the basis of water amount data, water temperature data, and power data accumulated for a certain time.
